Europäisches Patentamt

European Patent Office

Office européen des brevets

(11) Publication number: **0 131 556**
**B1**

## (12) EUROPEAN PATENT SPECIFICATION

(45) Date of publication of patent specification: **09.03.88**

(51) Int. Cl.⁴: **F 16 B 39/24**

(21) Application number: **84850174.8**

(22) Date of filing: **07.06.84**

(54) **Bipartite wedge locking washer.**

(30) Priority: **10.06.83 SE 8303319**

(43) Date of publication of application:
**16.01.85 Bulletin 85/03**

(45) Publication of the grant of the patent:
**09.03.88 Bulletin 88/10**

(84) Designated Contracting States:
**DE FR GB NL SE**

(56) References cited:
**DE-A-2 413 760**
**DE-A-2 649 077**
**GB-A-2 039 658**
**SE-B- 425 684**
**US-A-3 263 727**
**US-A-4 377 361**

(73) Proprietor: **NOBEX AKTIEBOLAG**
**S-830 02 Mattmar (SE)**

(72) Inventor: **Keife, Anders**
**Akervägen 1**
**S-830 44 Nälden (SE)**

(74) Representative: **Grahn, Thomas et al**
**Oscar Grahn Patentbyra AB Erik Lindquist**
**Patentbyra AB P.O. Box 19540**
**S-104 32 Stockholm (SE)**

Courier Press, Leamington Spa, England.

## Description

The present invention relates to a bipartite wedge locking washer for locking a screw connection consisting of a stud bolt upstanding from a substructure, with a nut screwed thereon, or a bolt upstanding from the substructure. The bipartite wedge locking washer has an inner locking washer engaging against the substructure with friction teeth and an outer locking washer engaging with friction teeth against the nut or bolt head. The inner and outer locking washers each have radial friction teeth which are unsymmetrical in the washer peripheral direction and provided with gripping edges engaging the substructure and nut/bolt head for preventing the washer from rotation in the loosening direction relative the bearing surface when the nut/bolt head is rotated for loosening the screw connection. The inner and outer locking washers mutually engage over steplike, sloping complementary surfaces having a slope with reference to a plane at right angles to the axis of the screw connection such that the outer locking washer is removed axially from the inner locking washer under elastic elongation of the bolt during rotation in the loosening direction of the nut or bolt head.

A locking washer of this kind is known from the US—A—3 263 727. The coacting sloping surfaces on the outer and inner locking washers form combs or crests of a height such that this height exceeds calculated elongation of the bolt during loading, but falls below permitted elastic elongation of the bolt, when the connection is loosened and the crests of the locking washers must pass over each other. The locking washers are further provided with friction teeth engaging against the substructure and against the nut or bolt head. These friction teeth are provided in the form of radial protuberances having a front face inclined at about 30° and a rear face inclined at about 60° from the washer face. The teeth have a crowned top portion providing a point contact edge cutting into the substructure and nut/bolt head when tightening the screw connection, whereby material is removed from the edge portion with corresponding tearing of engaging bearing surfaces.

SE—C—425 684 describes a similar locking washer including an inner and outer washer which engage against each other over sloping steplike surfaces and are provided on their faces engaging against the substructure, nut or bolt head with symmetrical friction teeth, i.e. teeth working in both directions of rotation about the axis of the connection.

These known locking washers provide, per se, an effective locking action, but have certain deficiencies in relation to the possibility of accurately controlling the elongation and pretensioning to which the bolt is subjected both during fixing and in the final bolted connection. In a qualified, highly loaded screw connection the bolt is normally pretensioned to about 70% of the material yield point. From the functional aspect it is naturally of great importance that this pretensioning is properly kept. The pretensioning is checked on tightening the connection with the aid of a so-called torque spanner which indicates the torque exercised on the nut or bolt head, with the necessary corrections for friction in the threads and friction between the nut or bolt head and (usually) the outside of the outer locking washer. Where necessary, the friction between the inner locking washer and the substructure must also be taken into account. In the use of known locking washers, there is relatively large friction between nut (bolt head) and the outer locking washer when the connection is tightened. The friction can be so great that even the inner washer starts to rotate against the substructure. These frictional torques between the washers and nut (bolt head) are extremely difficult to determine with certainty, since the washers are provided with gripping teeth which more or less dig into the engaging material surface.

For the known locking washer to function satisfactorily so that a sufficiently large counter locking torque is achieved should the connection tend to loosen, the sloping surfaces have previously been made with relatively large slope and height to the crests. When the connection is to be loosened intentionally, with the inner washer normally retained against the substructure while the outer washer accompanies the rotation of the nut (bolt head), the bolt will need to be elongated to the extent corresponding to the entire crest height of the washers, which means that a considerable loosening torque must be applied. If the pretensioning of the bolt is greater than calculated, due to the difficulty in checking tightening, the bolt may be elongated in excess of the elastic limit, which is not desirable.

The invention has the object of providing a bipartite wedge locking washer for a screw connection of the kind mentioned in the introduction, which is not burdened with the abovementioned disadvantages and enables reliable, controlled tightening of the screw connection to the desired pretensioning of the bolt, a relatively low required torque being ensured at the same time for loosening the connection with minor further elongation of the bolt.

In accordance with the invention this object is achieved with the aid of a bipartite wedge locking washer having the characterizing features disclosed in the accompanying claim 1.

The implementation of the friction teeth provides a singly directed action against the washer engaging surface. The friction teeth on the inner lock washer thus present the washer from rotating in the loosening direction relative the substructure, but do not substantially hinder the washer from rotating in the opposite direction relative the substructure during tightening. The friction teeth on the outer lock washer once again prevent the nut or bolt head from rotating in the loosening direction relative the washer but do not substantially hinder the nut or bolt head from rotating in the opposite direction relative the washer during tightening. As a result of the shape of the friction teeth there is obtained a frictional resistance which practically corresponds to the frictional resistance for an entirely plain washer without friction teeth.

A locking washer with friction teeth in accordance with the invention has surprisingly good gripping action against the washer engaging surface, even when the friction teeth have small dimensions. In a preferred embodiment the height of the gripping edge of the friction tooth may thus amount to merely 0,1 mm or less. The flat contiguous to the gripping edge has a width of suitable at least 0,05 mm with an adjoining slope having an angle less than 25° to the plane of the washer. These small gripping teeth, with a very shallow one-sided slope cause low resistance when the bolt connection is tightened, but due to the edge action of the projection they develop a very effective resistance between the washer and its engagement surface when the connection is to be loosened.

By the small dimensions and shape of the gripping teeth it is ensured that the tteeth are impressed into respective engagement surfaces without difficulty and without tearing them. The teeth take up an insignificant part of the engagement surface of the washer, which is thus effectively utilized as engagement surface for the bolt connection.

With the locking washer of the kind in question the sloping surfaces of the washer must necessarily have a larger slope angle than the lead angle of the bolt connection. Since the slope of the sloping surfaces of the lock washer in accordance with the invention only result in an elongation of the bolt which is less than about 10% of the bolt elongation for a tightened connection, the slope of the sloping surfaces can be limited in the invention so that the slope angle in a preferred embodiment does not exceed the lead angle by more than a maximum of 50% and usually less than this value.

To ensure particularly good friction between the inner locking washer and the substructure in the loosening direction, it may be suitable to make this washer with an increased diameter and correspondingly increased length of the friction teeth. The friction teeth are thus given a better opportunity to grip into the substructure. This increased gripping action is associated with the friction teeth in accordance with the invention being impressed into the substructure to work against it with a certain amount of edge action. On the outer washer a corresponding increase of the diameter, and thus the length of the friction teeth, is not usually possible since the diameter of the nut or bolt head set a limit in this case.

In a suitable combination of an inner and outer locking washer with different diameters for the frictional surfaces, the inner and the outer locking washer can commonly be defined by a conical surface converging from the underside of the inner washer.

So that associated outer and inner washer will always accompany each other, the outer washer can have a conical circumference, which is enclosed with clearance by an annular flange projecting from the inner washer, so that the washers can be separated to a certain degree for allowing the crests to pass each other.

Alternatively, the washers can be kept together with the aid of an elastic, adhesive material applied to the sloping surfaces, whereby the assembled bipartite wedge locking washer is always available as a complete unit.

The friction teeth are preferably disposed on the side of the locking washer opposite to the sloping surfaces, and approximately halfway between the crests of the slopes, which gives a suitable material distribution in the washer and thereby lessens the risk for crack formation during its heat treatment. The number of friction teeth can be equal to, or less than, the number of crests on the washer, since a limited number of friction teeth also gives sufficient gripping action between the washer and its engaging surfaces in many cases.

The invention is described below in the form of an embodiment and with reference to the accompanying drawings, on which

Figure 1 is a perspective view of an outer locking washer with single action friction teeth in accordance with the invention,

Figure 2 is a partial side view of an outer locking washer to a larger scale showing the contours of a friction tooth and a crest with its sloping surface,

Figure 3 is a perspective view of an inner locking washer with single action friction teeth in accordance with the invention,

Figure 4 is a partial side view to a larger scale of the last-mentioned washer illustrating the contours of a friction tooth and a crest with its sloping surface,

Figure 5 is a side view of the complete bipartite wedge locking washer with an inner and an outer washer with some sloping surfaces in mesh, and with an adhesive layer between the sloping surfaces,

Figure 6 is a schematic development of the circumference of the washer with respective sloping surfaces in direct engagement against each other,

Figure 7 is an axial partial section through a further embodiment of the locking washer,

Figure 8 is an axial partial section through a further alternative embodiment of the locking washer,

Figure 9 is a partial plan view of the inner washer with radial friction teeth,

Figure 10 is a partial plan view of the outer washer with radial friction teeth.

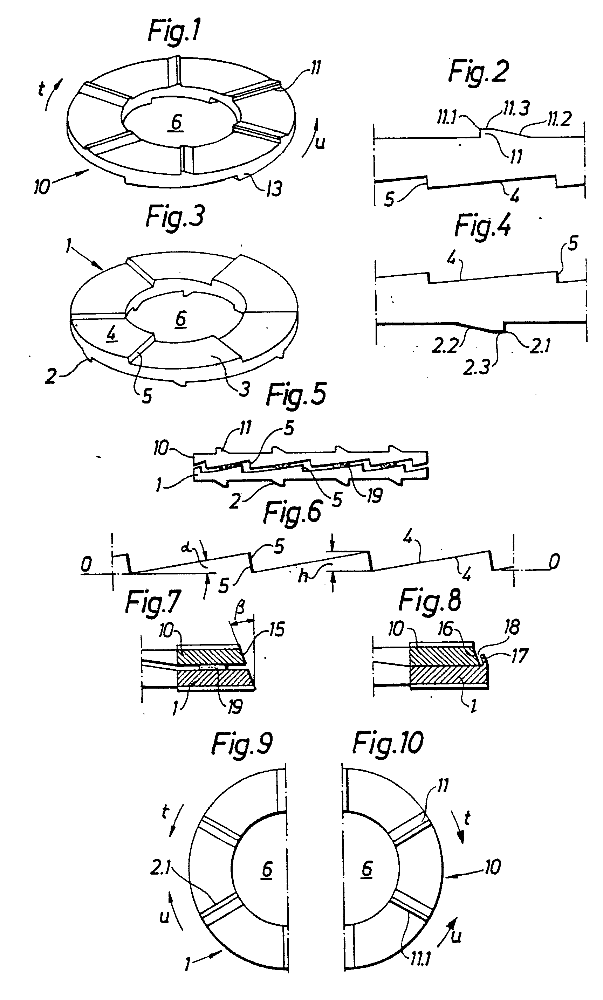

The bipartite wedge locking washer in accordance with the invention has an outer locking washer 10 engaging against the underside of the nut or bolt head of the screw connection, and an inner locking washer 1 engaging against the fixed substructure of the connection (Figures 1 and 3). The washers 1 and 10 have the same outside diameters and are both provided with a central hole 6 of the same diameter in both washers. Both washers are provided with crests 3, 13 having weakly sloping crest surfaces 4 and forward crest walls 5 forming complemental surfaces of the washers when they are assembled together. In an assembled condition the washers are placed about a threaded member going through the central opening, this member engaging the substructure against which the inner washer 1 is in contact. The member may be a stud bolt projecting from the substructure, which in the present connection is regarded as unrotatable relative the substructure, or a bolt passing through the substructure. The bolt head, or nut threaded onto the outer end of the stud bolt, engages against the outside of the outer washer 10 in an assembled condition.

The inner locking washer 1 is provided with crests 3 with sloping surfaces 4 and forward crest walls 5. On its side facing towards the substructure the washer has substantially radial friction teeth 2. As will be seen from Figure 4 these friction teeth are one-sided, i.e. the teeth exercise strong frictional action in one rotational direction of the washer against its engagement surface and a week frictional action in the opposite direction. For this purpose the teeth in the contour illustrated in Figure 4 have a gripping edge 2.1 directed towards the substructure. The gripping edge prevents rotation of the washer relative the substructure when the nut or bolt head tend to rotate in the loosening direction (the arrow u in Figure 9). Away from its gripping edge, the friction tooth merges via flat portion 2.3 and a slope 2.2 into the outside of the washer engaging against the substructure.

The outer washer 10 is, like the inner one, provided with crests 13 with sloping surfaces 4 and forward crest walls 5 complementary to those on the washer 1. On its side facing towards the underside of the nut or bolt head of the screw connection, the washer has substantially radial friction teeth 11. As will be seen from Figure 2, these friction teeth are one-sided, i.e. in one rotational direction of the washer the teeth exert large frictional action against its engaging surface, and a weak frictional action in the opposite direction. For this purpose the teeth have, like the friction teeth on the inner washer, a contour according to Figure 2 with a gripping edge 11.1 meeting the digging into the engagement surface of the nut (bolt head) when the latter rotates in a direction for loosening the connection (the arrow u in Figures 1 and 10). Away from its gripping edge the friction tooth merges via a flat portion 11.3 and a slope 11.2 into the outside of the washer 10.

Friction teeth with the contour described above have been found to have very good gripping action even when the contour has very small dimensions. The height of the projecting shoulder at the gripping edge 2.1;11.1 thus does not need to exceed 0,1 mm. The flat 2.3; 11.3 is then given a width of suitably at least 0,05 mm, while the slope 2.2; 11.2 merging with the flat has a shallow angle not exceeding 25° with the plane of the washer. In a suitable practical embodiment, the height of the gripping edge may be 0,1 mm, the width of the flat 0,2 mm and the angle of the slope 15°. Such a washer gives very low friction against the washer engagement surface when tightening, but effectively grips the engagement surface when the connection is loosened by applying a torque to the nut or bolt head. Due to the relatively small slope of the washer sloping surfaces 4 and corresponding small height $h$ of the crests (Figure 6), corresponding to a further elongation of the bolt not exceeding about 10% of its elongation for a tightened connection, the screw connection can be loosened relatively easily without the bolt being subjected to risky elongation, as will be described in detail below.

Digging of the gripping teeth into the surfaces engaging the washer when tightening the connection is avoided by their shape. On the other hand, the teeth grip the respective engagement surface sufficiently strongly to retain the inner washer against the substructure and the outer washer against the nut or bolt head, and to transfer the relatively limited loosening torque between the washer and engagement surface when the connection is to be intentionally loosened, without the washer then tending to tear up the engagement surface on the substructure, nut or bolt head.

A limited number of gripping teeth also gives the necessary gripping action, the tooth contour in its entirety thus being impressed into the associated engagement surface without difficulty, so that the flat surface of the washer between the gripping teeth will in its entirety serve as an effective support surface against the substructure and nut or bolt head.

As will be seen from Figures 1—4, the crests on one side of the washer are shifted relative the friction teeth on the opposite side of the washer so that a friction tooth is approximately halfway between two crests. This disposition of crests and friction teeth is particularly advantageous from the aspect of reducing the risk of crack formation in the washer, since possible stress concentrations will be more evenly distributed over both sides of it.

As illustrated, the locking washer can have an equal number of crests and friction teeth on each part washer. It may also be advantageous to provide the washer with a lesser number of friction teeth than crests, whereby the friction against the substructure and nut (bolt head) can be further reduced during tightening. In this case as well, the friction teeth are placed so that each tooth will approximately lie between two crests.

The general function of the locking washers with crests 3 is known. When tightening the screw connection the forward crest walls 5 on the respective washers meet each other and the split washer unit functions as an entity. The friction surfaces respectively engage against the substructure and nut (bolt head) to retain it in a locked position. Depending on the implementation of the friction surfaces there will be more or less appreciable impressions on the nut (bolt head) and substructure. The object is in principle to retain the inner and the outer washer against the respective friction engagement surface. The tendency of the nut (bolt head) to loosen is counteracted by increased engagement force between the crest walls 5 when the outer washer rotates with accompanying elongation of the bolt. As long as the elongation of the bolt does not exceed the crest height $h$, the nut (bolt head) with accompanying outer washer cannot rotate so far that the connection is loosened. In order to intentionally loosen the connection, a sufficiently large torque is applied to the nut (bolt head) which allows the crests to pass each other while the bolt is elastically elongated. The resulting elongation of the bolt corresponds to said value $h$ decreased by the portion of the thread pitch corresponding to the amount the bolt has rotated and by a certain permanent deformation of the crest.

Figure 5 illustrates the locking washer in accordance with the invention in a side view. The inner and outer washers are in this case provided with a larger number of crest walls 5 than those on Figures 1 and 3, but are otherwise implemented alike. The outer washer 10 is provided with single action friction teeth 11 and the inner washer 1 is similarly provided with single action friction teeth 2. The washers 1 and 10 are kept together in this case with the aid of an adhesive material 19, which is applied to the sloping surfaces 4, whereby the washers form a cohesive unit. The adhesive material suitably has such properties that the sloping surfaces are allowed to slide against each other.

Figure 6 illustrates a schematic development of a part of the circumference of the meshing washers 1, 10 with the respective crests completely meshing with each other without clearance. The angle of the sloping surfaces 4 with a plane 0—0 at right angles to the axis of the connection is given with the angle of slope while the crest height is denoted by $h$. For the washer to have locking action the angle $a$ must be greater than the lead angle of the bolt thread. Furthermore, the crest height $h$ must usually be greater than the axial elongation to which the bolt is subjected by its working load. As already mentioned, the bolt is usually pretensioned to an elongation corresponding to 70% of the bolt elongation resulting in permanent set. It is a desire that said pretension or corresponding elongation shall be kept with reasonable certainty and that on loosening the connection the bolt is elongated as little as possible. Relatively large margins have previously been reckoned with relating to the angle $a$ as well as the crest height $h$ to ensure required locking. It has now been surprisingly found that satisfactory locking is obtained when the angle $a$ only insignificantly exceeds the lead angle of the bolt, and the crest height $h$ is such that it only gives rise to a further elongation of about 10% when the connection is loosened. Crest sloping surfaces with such an action have the large advantage that the screw connection can be relatively easily loosened without the bolt being subjected to risky elongation. The angle normally only needs to exceed the lead angle of the bolt by a couple of tens of degrees, and a 50% increase in degrees in comparision with the lead angle can be set as comfortable upper limit.

By the combination of single action friction teeth on the washers and crests on them with a slope and crest height such that about 10% over-elongation of the bolt is obtained on loosening, there is achieved a locking washer with the possibility of accurately controllable pretension of the bolt, simple loosening of the connection under the development of a relatively small torque and minor over-elongation of the bolt during loosening.

Trials carried out show that an outer washer with the friction teeth in accordance with the invention has approximately the same frictional action against the nut (bolt head) as a flat washer in the tightening direction, while the friction action in the opposite direction is considerably larger. This applies correspondingly to the inner washer as well.

For ensuring in practice that outer and inner washers are always combined into a unit it is suitable that the pair of washers are kept together beforehand, although in such a way that the washers can rotate relative each other. With this object, an adhesive material 19 on the sloping surfaces 4 can be used for rotatably connecting the washers to each other. The material can suitably have a certain amount of lubrication action to reduce the mutual friction of the sloping surfaces when loosening the connection. Figures 5 and 7 illustrate such an embodiment where the inner and the outer washer are kept together with the aid of an adhesive material 19 according to the above.

With a corresponding aim, the outer and inner washers can be attached to each other as illustrated in Figure 8. In this case the edge surface 16 of the outer washer 10 converges outwardly and the surface 16 is surrounded by a flange 17 extending from the inner washer at the same slope as the edge surface 16 with a given clearance 18 therebetween. The clearance is such that the washers can be separated sufficiently for allowing the crests 3 to pass over each other, possibly with a small outward flexing of the flange 17.

To improve the grip of the inner washer against the substructure it can be advantageous to increase the diameter of its engagement surface and thereby the length of the friction teeth. Experience has shown that the gripping ability of the teeth against the substructure for the same total bearing pressure increases when the teeth have a greater length. The frictional force or gripping force between the washer and substructure thus does not correspond to the frictional force usually counted on between two relatively smooth engagement surfaces. The reason for the demonstrated increased gripping action appears to be associated with that the friction teeth in accordance with the invention are impressed into the substructure and work against it with a certain edge action. A corresponding increase of the diameter or length of the friction teeth on the outer washer is usually not justified, taking into account the usually limited diameter of nut or bolt head.

A suitable embodiment of a locking washer with increased diameter of the inner washer is illustrated in Figure 7. The circumference of both washers is limited by a conical surface 15 converging from the underside of the inner washer with an angle β to the axis of the connection. As previously mentioned with reference to this Figure, both washers are kept together with the aid of an adhesive material 19.

Figures 9 and 10 illustrate in partial plan view the arrangement of friction teeth on the inner washer 1 and the outer washer 10. The friction teeth extend substantially radially towards the axis of the connection. The rotational direction of the nut (bolt head) on the Figures is denoted by the arrow *t* for tightening and by the arrow *u* for loosening. The washer on Figure 9 is seen from its side facing towards the substructure, while the washer in Figure 10 is seen from the outside. It will be seen from Figure 9 that the inner washer 1 is acted on during tightening in a direction such that the slope 2.2 on the friction teeth meets the substructure, while on the other hand the gripping edge 2.1 meets the substructure and digs into it when the washer is caused to rotate in the loosening direction. It will further be seen from Figure 10 that the nut (bolt head) meets the slope 11.2 of the friction teeth of the washer 10 during tightening, while the gripping edge 11.1 of the teeth meet the engagement surface of the nut (bolt head) when it is rotated in the loosening direction, so that the movement in this direction is hindered.

In the above description, the locking washer is disposed for locking a nut on a stud bolt projecting non-rotatably from a substructure or a bolt projecting from the substructure. It will be understood that the locking washer can be used in any way for locking a screw connection, including a screw with a head which extends in a free hole through two or more associated parts and a nut screwed·onto the thread of the screw. The locking washer can for example be disposed to lock both bolt head and nut against the respective substructure, or solely the nut against its substructure, in which case the bolt head is locked against the substructure in some other way.

**Claims**

1. A bipartite wedge locking washer for locking a screw connection, consisting of a stud bolt projecting non-rotatably from a substructure with a nut screwed onto the stud or by a bolt gripping through the substructure, including an inner locking washer (1) engaging against the substructure and an outer locking washer (10) engaging against the nut/bolt head, each washer having approximately radial friction teeth (2; 11) which are unsymmetrical in the peripheral direction of the washer and have gripping edges directed respectively towards the substructure and nut/bolt head so as to prevent the washer from rotating in the loosening direction relative to the bearing surface during rotation of the nut/bolt head in said direction, and said inner and outer locking washers meshing with each other along sloping complementary surfaces (4) with a slope (α) to a plane (0—0) at right angles to the axis of the screw connection such that the outer locking washer (10) is removed axially from the inner locking washer (1) during elastic elongation of the bolt when the nut/bolt head is rotated for loosening the connection by applying a torque to the nut/bolt head in the loosening direction, characterized in that the friction teeth (2; 11) have a flat (2.3; 11.3) starting from the gripping edge (2.1; 11.1), with a slope (2.2; 11.2) merging into the flat and having a slight angle to the plane (0—0) of the washer, and a wall from the gripping edge to the washer substantially perpendicular to the washer, said slope meeting the bearing surface in the tightening direction thus causing a minor rotational resistance only when tightening the connection, while the wall meets the bearing surface in the loosening direction and by edge action develops an effective rotational resistance when loosening the connection and that for completely loosening the connection the slope (α) of the crest sloping surfaces (4) causes elongation of the bolt not exceeding about 10% of its elongation for a tightened connection.

2. Locking washer as claimed in claim 1, characterized in that the height of the wall to the gripping edge (2.1; 11.1) does not exceed 0,1 mm and that the flat (2.3; 11.3) has a width of at least 0,05 mm and that the slope (2.2; 11.2) has an angle of at most 25% to the plane of the washer.

3. Locking washer as claimed in claim 1 and claim 2, characterized in that the washer (1; 10) is defined between the gripping teeth by a flat bearing surface at right angles to the axis of the screw connection, said surface substantially forming the washer bearing surface against the nut/bot head in a loaded screw connection.

4. Locking washer as claimed in claim 1, characterized in that the angle (α) of the sloping surfaces (4) is maximally 50% greater than the lead angle of the thread in the screw connection.

5. Locking washer as claimed in claims 1—3, characterized in that the inner locking washer (1) has a greater outside diameter and corresponding greater length of the friction teeth than the outer lock washer (10).

6. Locking washer as claimed in claim 5, characterized in that the inner (1) and outer (10) locking washers are commonly defined by a conical surface (15) converging from the underside of the inner washer.

7. Locking washer as claimed in claim 5, characterized in that the edge surface of the outer locking washer (10) converges conically from the inner locking washer (1) and is surrounded by a conical angular flange (17) departing from the inner locking washer, there being a radial clearance (18) between the flange (17) and the outer locking washer (10) for allowing limited axial separation of the washers (1; 10).

8. Locking washer as claimed in claim 1, characterized in that the outer (10) and the inner (1) locking washers are kept together conventionally with the aid of an elastic, adhesive material (19) applied to the sloping surfaces (4), and which allows the washers to rotate relative each other.

9. Locking washer as claimed in any of the preceeding claims, characterized in that the friction teeth (2; 11) of the inner (1) and the outer (10) locking washer are situated on the side of the respective washer opposite to that of the crests (3; 13) and approximately halfway between said crests.

10. Locking washer as claimed in claim 9, characterized in that the number of friction teeth (2; 11) on the inner (1) and the outer (10) locking washer are equal to the number of crests (3; 13) in the washer.

11. Locking washer as claimed in claim 9, characterized in that the number of friction teeth (2; 11) on the inner (1) and the outer (10) locking washer is less than the number of crests (3, 13) in the washer.

**Patentansprüche**

1. Zweigeteilte Keil-Sicherungsscheibe zum Sichern einer Gewindeverbindung, die aus einem von einem Unterbauteil undrehbar abstehenden Gewindebolzen mit einer auf den Bolzen aufgeschraubten Mutter oder aus einem das Unterbauteil durchsetzenden Schraube besteht, mit einer an dem Unterbauteil anliegenden inneren Sicherungsscheibe (1) und einer an der Mutter oder dem Bolzenkopf anliegenden äußeren Sicherungsscheibe (10), wobei jede Scheibe näherungsweise radiale Reibungszähne (2; 11) aufweist, die in Umfangsrichtung der Scheibe unsymmetrisch sind und Eingriffskanten aufweisen, die dem Unterbauteil bzw. der Mutter oder dem Bolzenkopf zugekehrt sind, um eine Verdrehung der Scheibe gegenüber der Abstützfläche in Löserichtung während einer Verdrehung der Mutter oder des Bolzenkopfes in dieser Richtung zu verhindern, wobei die innere und die äußere Sperrscheibe längs geneigter komplementärer Flächen (4) miteinander in Eingriff stehen, die gegenüber einer zur Achse der Gewindeverbindung rechtwinkligen Ebene (0—0) unter einem Winkel α geneigt sind, so daß sich die äußere Sperrscheibe (10) von der inneren Sperrscheibe (1) während einer elastischen Verlängerung des Bolzens axial entfernt, wenn die Mutter oder der Bolzenkopf zum Lösen der Verbindung verdreht wird, indem auf die Mutter oder den Bolzenkopf in Löserichtung ein Drehmoment aufgebracht wird, dadurch gekennzeichnet, daß die Reibungszähne (2; 11) eine von der Eingriffskante (2.1; 11.1) ausgehende ebene Fläche (2.3; 11.3), eine in die ebene Fläche übergehende und zur Ebene (0—0) der Scheibe leicht geneigte Schrägfläche (2.2; 11.2) und eine Wand aufweisen, die sich von der Eingriffskante der Scheibe im wesentlichen rechtwinklig zu der Scheibe erstreckt, wobei die Schrägfläche in Anziehrichtung auf die Lagerfläche trifft, wodurch nur beim Anziehen der Verbindung ein geringer Drehwiderstand verursacht wird, während die Wand in Löserichtung auf die Lagerfläche trifft und beim Lösen der Verbindung durch Kantenwirkung einen wirksamen Drehwiderstand verursacht, und daß zum vollständigen Lösen der Verbindung die Neigung α die Scheitelschrägflächen (4) eine Verlängerung des Bolzens bewirken, die 10% seiner Verlängerung für eine angezogene Verbindung nicht übersteigt.

2. Sicherungsscheibe nach Anspruch 1, dadurch gekennzeichnet, daß die Höhe der Wand der Eingriffskante (2.1; 11.1) 0,1 mm nicht übersteigt und daß die ebene Fläche (2.3; 11.3) eine Breite von mindestens 0,05 mm aufweist und daß die Schrägfläche (2.2; 11.2) gegenüber der Ebene der Scheibe einen Winkel von maximal 25° aufweist.

3. Sicherungsscheibe nach Anspruch 1 oder 2, dadurch gekennzeichnet, daß die Scheibe (1; 10) zwischen den Eingriffszähnen durch eine zur Achse der Gewindeverbindung rechtwinklige Abstützfläche begrenzt ist, wobei diese Fläche im wesentlichen die Abstützfläche der Scheibe an der Mutter oder dem Bolzenkopf bei angezogener Gewindeverbindung bildet.

4. Sicherungsscheibe nach Anspruch 1, dadurch gekennzeichnet, daß der Winkel α der Schrägflächen (4) maximal 50% größer ist als die Gewindesteigung der Gewindeverbindung.

5. Sicherungsscheibe nach Anspruch 1 bis 3, dadurch gekennzeichnet, daß die innere Sicherungsscheibe (1) einen größeren Außendurchmesser und eine entsprechend größere Länge der Reibungszähne aufweist als die äußere Sicherungsscheibe (10).

6. Sicherungsscheibe nach Anspruch 5, dadurch gekennzeichnet, daß die innere Sicherungsscheibe (1) und die äußere Sicherungsscheibe (10) gemeinsam von einer konischen Fläche (15) begrenzt sind, die von der Unterseite der inneren Sicherungsscheibe konvergiert.

7. Sicherungsscheibe nach Anspruch 5, dadurch gekennzeichnet, daß die Randfläche der äußeren Sicherungsscheibe (10) von der inneren Sicherungsscheibe (1) konisch konvergiert und von einem von der inneren Sicherungsscheibe ausgehenden konischen Ringflansch (17) umgeben ist, wobei zwischen dem Flansch (17) und der äußeren Sicherungsscheibe (10) ein radialer Zwischenraum (18) besteht, um eine begrenzte axiale Trennung der Scheiben (1; 10) zu ermöglichen.

8. Sicherungsscheibe nach Anspruch 1, dadurch gekennzeichnet, daß die äußere und die innere Sicherungsscheibe (10; 1) in herkömmlicher Weise mit Hilfe eines elastischen Klebstoffs (19) zusammengehalten sind, der auf die Schrägflächen (4) aufgebracht ist und eine Relativverdrehung der Scheiben ermöglicht.

9. Sicherungsscheibe nach einem der vorhergehenden Ansprüche, dadurch gekennzeichnet, daß die Reibungszähne (2; 11) der inneren und der äußeren Sicherungsscheibe (1; 10) auf der den Scheiteln (3; 13) gegenüberliegenden Seite der betreffenden Scheibe und näherungsweise in der Mitte zwischen diesen Scheiteln angeordnet sind.

10. Sicherungsscheibe nach Anspruch 9, dadurch gekennzeichnet, daß die Zahl der Reibungszähne (2; 11) auf der inneren und der äußeren Sicherungsscheibe (1, 10) der Anzahl der Scheitel (3; 13) der Sicherungsscheibe entspricht.

11. Sicherungsscheibe nach Anspruch 9, dadurch gekennzeichnet, daß die Anzahl der Reibungszähne (2; 11) auf der inneren und der äußeren Sicherungsscheibe (1, 10) kleiner ist als die Anzahl der Scheitel (3; 13) der Sicherungsscheibe.

## Revendications

1. Rondelle de verrouillage en deux parties pour verrouiller par effet de coin une liaison par vis, constituée d'un boulon fileté faisant saillie de manière non rotative par rapport à une structure sous-jacente avec un écrou vissé sur le boulon ou d'un boulon en prise dans la structure sous-jacente en la traversant, comprenant une rondelle de verrouillage interne (1) en prise contre la structure sous-jacente et une rondelle de verrouillage externe (10) en prise contre l'écrou ou respectivement la tête de boulon, chaque rondelle présentant des dents de friction (2; 11) sensiblement radiales qui sont asymétriques suivant la direction périphérique de la rondelle et présentent des bords de prise dirigés respectivement vers la base et l'écrou ou la tête de boulon par empêcher la rondelle de tourner dans le sens de déserrement par rapport à la surface d'appui pendant la rotation de l'écrou ou la tête de boulon dans ledit sens, et ces rondelles de verrouillage interne et externe engrenant l'une avec l'autre le long de surfaces complémentaires inclinées (4) avec une pente (α) par rapport à un plan (0—0) orthogonal à l'axe de la liaison par vis de manière que la rondelle de verrouillage externe (10) soit séparée axialement de la rondelle de verrouillage interne (1) pendant l'allongement élastique du boulon qui intervient quand l'écrou ou la tête de boulon est tournée pour déserrer la liaison par application d'un couple à l'écrou ou la tête de boulon dans le sens du déserrement, caractérisée en ce que les dents de friction (2, 11) présentent un méplat (2.3; 11.3) partant du bord de prise (2.1; 11.1), avec une partie inclinée (2.2; 11.2) rejoignant le méplat et faisant un angle faible par rapport au plan (0—0) de la rondelle, et une paroi s'étendant du bord de prise jusqu'à la rondelle sensiblement perpendiculairement à la rondelle, ladite partie inclinée rencontrant la surface d'appui dans le sens de serrage en créant ainsi une négligeable résistance à la rotation seulement lorsqu'on serre la liaison, tandis que la paroi rencontre la surface d'appui dans le sens du déserrement et par action de bord, développe une effective résistance à la rotation lorsqu'on déserre la liaison, et en ce que, pour déserrer complètement la liaison, la pente des surfaces inclinées (4) des crêtes provoque dans le boulon un allongement qui n'excède pas environ 10% de son allongement correspondant à une liaison serrée.

2. Rondelle de verrouillage conforme à la revendication 1, caractérisée en ce que la hauteur de la paroi qui s'étend jusqu'au bord de prise (2.1; 11.1) ne dépasse pas 0,1 mm, que le méplat (2.3; 11.3) a une largeur d'au moins 0,05 mm et que la partie inclinée (2.2; 11.2) fait un angle d'au plus 25% par rapport au plan de la rondelle.

3. Rondelle de verrouillage conforme à l'une des revendications 1 et 2, caractérisée en ce que la rondelle (1; 10) est définie entre les dents de friction par une surface d'appui plate orthogonale à l'axe de la liaison par vis, cette surface formant sensiblement la surface d'appui de la rondelle contre l'écrou ou la tête de boulon dans une liaison par vis sous charge.

4. Rondelle de verrouillage conforme à la revendication 1, caractérisée en ce que l'angle (α) des surfaces inclinées (4) est au maximum supérieur de 50% à l'angle d'attaque du filetage de la liaison par vis.

5. Rondelle de verrouillage conforme à l'une des revendications 1 à 3, caractérisée en ce que la rondelle de verrouillage interne (1) a un plus grand diamètre extérieur et a une longueur plus grande correspondante des dents de friction que la rondelle de verrouillage externe (10).

6. Rondelle de verrouillage conforme à la revendication 5, caractérisée en ce que les rondelles de verrouillage interne (1) et externe (10), sont définies l'une et l'autre par une surface conique (15) convergeant à partir du côté inférieur de la rondelle interne.

7. Rondelle de verrouillage conforme à la revendication 5, caractérisée en ce que la surface marginale de la rondelle de verrouillage externe (10) converge coniquement à partir de la rondelle de verrouillage interne (1) et est entourée par un rebord angulaire conique (17) partant de la rondelle de verrouillage interne, un jeu radial (18) étant ménagé entre le rebord (17) et la rondelle de verrouillage externe (10) pour permettre une séparation axiale limitée des rondelles (1; 10).

8. Rondelle de verrouillage conforme à la revendication 1, caractérisée en ce que les rondelles du verrouillage interne (1) et externe (10) sont maintenues ensemble classiquement à l'aide d'un matériau élastique adhésif (19) appliqué contre les surfaces inclinées (4), et qui permet aux rondelles de tourner l'une par rapport à l'autre.

9. Rondelle de verrouillage conforme à l'une des revendications précédentes, caractérisée en ce que les dents de friction (2; 11) des rondelles de verrouillage interne (1) et externe (10) sont situées sur le côté de la rondelle respective opposé à celui des crêtes (3; 13) et approximativement à mi-chemin entre ces crêtes.

10. Rondelle de verrouillage conforme à la revendication 9, caractérisée en ce que le nombre de dents de friction (2; 11) sur les rondelles de verrouillage interne (1) et externe (10) est égal au nombre de crêtes (3; 13) de la rondelle.

11. Rondelle de verrouillage conforme à la revendication 9, caractérisée en ce que le nombre de dents de friction (12; 11) sur les rondelles de verrouillage interne (1) et externe (10) est inférieur au nombre de crêtes (3; 13) de la rondelle.

Fig.1

Fig.2

Fig.3

Fig.4

Fig.5

Fig.6

Fig.7

Fig.8

Fig.9

Fig.10